# EUROPÄISCHE PATENTANMELDUNG

(11) **EP 2 060 737 A1**
(43) Veröffentlichungstag der Anmeldung: **20.05.2009**
(21) Anmeldenummer: 07120774.0
(22) Anmeldetag: 15.11.2007
(51) Int. Cl.: F01B 7/18, F02B 19/04, F02B 19/08, F02B 23/06, F02B 33/14

(54) **Zylinderanordnung für eine Hubkolbenbrennkraftmaschine, sowie Hubkolbenbrennkraftmaschine**

(71) Anmelder: Wärtsilä Schweiz AG, 8401 Winterthur (CH)
(72) Erfinder: Schulz, Dr., Reiner, 8408, Winterthur (CH)
(74) Vertreter: Sulzer Management AG

(57) **Zusammenfassung**

Die Erfindung betrifft eine Zylinderanordnung (1) für eine Hubkolbenbrennkraftmaschine mit mindestens einem Zylinder (2), in welchem Zylinder (2) ein Kolben (3) zwischen einem oberen Totpunkt (OT) und einem unteren Totpunkt (UT) hin- und herbewegbar angeordnet ist. Im Zylinder (2) ist durch einen Zylinderdeckel (4), eine Zylinderwand (5), und eine Kolbenoberfläche (6) des Kolbens (3), ein Brennraum (7) umfassend einen Teilbrennraum (11, 1100) begrenzt, wobei der Brennraum (7) gegen eine Unterseite (8) des Kolbens (3) durch eine mindestens einen Kolbenring (9) umfassende Kolbenringpackung abgedichtet ist. Erfindungsgemäss ist ein Druckraum (10, 100, 1000) und ein Strömungskanal (12) zur Bildung einer Gasströmung (13) zwischen dem Druckraum (10, 100, 1000) und dem Teilbrennraum (11, 1100) vorgesehen. Die Erfindung betrifft darüber hinaus eine Hubkolbenbrennkraftmaschine mit einer solchen Zylinderanordnung (1).

## Beschreibung

Die Erfindung betrifft eine Zylinderanordnung für eine Hubkolbenbrennkraftmaschine, insbesondere für einen Zweitakt- oder Viertakt Dieselmotor, Benzinmotor oder Gasmotor, im Speziellen für einen Zweitakt-Grossdieselmotor zur Verbrennung von Schweröl, sowie eine Hubkolbenbrennkraftmaschine mit einer Zylinderanordnung gemäss dem Oberbegriff der unabhängigen Ansprüche 1 und 14.

Zur Leistungs- und Effizienzsteigerung von Hubkolbenbrennkraftmaschinen, zum Beispiel bei den zuvor erwähnten Grossdieselmotoren, wird nach einem Verbrennungstakt die Frischluft mittels einer Aufladegruppe, die in der Regel als Abgasturbolader ausgelegt ist, unter erhöhtem Druck in den Brennraum eines Zylinders eingebracht. Dabei kann ein Teil der thermischen Energie der Abgase ausgenutzt werden, die den Brennraum des Zylinders nach dem Verbrennungstakt verlassen. Dazu werden die heissen Abgase durch Öffnen eines Auslassventils aus dem Brennraum des Zylinders der Aufladegruppe zugeführt. Die Aufladegruppe besteht im wesentlichen aus einer Turbine, die durch die unter Druck in die Aufladegruppe eintretenden heissen Abgase angetrieben wird. Die Turbine treibt ihrerseits einen Verdichter an, wodurch Frischluft angesaugt und verdichtet wird. Den Verdichter mit Turbine, eine Anordnung, die häufig auch einfach als Turbolader bezeichnet wird und insbesondere, aber nicht nur, im Fall von Zweitakt Grossdieselmotoren ein Radialverdichter verwendet, ist ein sogenannter Diffusor, ein Ladeluftkühler, ein Wasserabscheider und ein Einlassreceiver nachgeschaltet, von wo aus die komprimierte Frischluft, auch als Ladeluft oder Spülluft bezeichnet, schliesslich in die einzelnen Brennräume der Zylinder des Grossdieselmotors eingespeist wird. Durch den Einsatz einer solchen Aufladegruppe kann somit die Frischluftzufuhr erhöht und die Effizienz des Verbrennungsvorgangs im Brennraum des Zylinders gesteigert werden.

Die zuvor geschilderte Aufladung eines Zylinders durch ein Abgasturboladersystem zur Verbesserung der Verbrennung im Zylinder ist dabei selbstverständlich nicht nur für Grossdieselmotoren bekannt, sondern findet sich mehr oder weniger ähnlich bei allen möglichen Typen von Verbrennungsmotoren, sowohl bei Zweitakt-, als auch bei Viertaktmotoren, und sowohl bei mit Benzin, Diesel, Biotreibstoff oder Gas betriebenen Motoren.

Dabei reicht die Palette von derart ausgestatteten Motoren von kleinen Kraftfahrzeug-, Flugzeug- oder Schiffsmotoren, über mittelgrosse Motoren für etwas grössere Schiffe oder grosse Baumaschinen bis zu den bereits erwähnten Grossdieselmotoren mit Leistungen von bis zu 60.000KW und mehr.

Die Einspeisung der Luft in den Brennraum kann dabei an unterschiedlichen Stellen am Zylinder geschehen. So wird beispielsweise bei längs gespülten Zweitakt-Motoren die Luft über Spülschlitze, die in der Lauffläche im unteren Bereich des Zylinders angeordnet sind, in den Brennraum des Zylinders eingebracht. Dieses Prinzip ist sowohl z.B. bei kleinen Zweiradmotoren, die mit einem Benzin-Öl-Gemisch betrieben werden und kleine Leistungen von 1 KW bis zu wenigen KW haben seit langem bekannt und kommt auch bei den enorm leistungsstarken Zweitakt-Grossdieselmotoren, die in der Regel mit Schweröl befeuert werden, seit vielen Jahrzehnten erfolgreich zum Einsatz.

Bei Viertakt-Motoren wird die Ladeluft in der Regel über ein oder mehrere Einlassventile, die im Zylinderdeckel angeordnet sind, in den Brennraum des Zylinders eingebracht. Dabei sind durchaus auch Zweitakt-Motoren bekannt, die an Stelle von Spülschlitzen im unteren Bereich des Zylinders mit Einlassventilen im Zylinderdeckel ausgerüstet sind.

Dabei wird die Verbrennung in Hubkolbenbrennkraftmaschinen, und zwar sowohl bei Zweitakt- wie auch bei Viertakt-Motoren, abgesehen von der Aufladung durch ein Turboladersystem oder einen Kompressor, auch erheblich durch die Turbulenzen im Brennraum der an der Verbrennung beteiligten Gase, also vor allem durch die Turbulenzen der für die Verbrennung im Zylinder bereitgestellten Luft, beeinflusst. Diese Aussage gilt grundsätzlich gleichermassen für Benzin-, Gas und Dieselmotoren, insbesondere auch für Zweitakt-Grossdieselmotoren, wie sie zum Beispiel in Schiffen oder in stationären Anlagen zur Erzeugung elektrischer Energie zum Einsatz kommen.

Grundsätzlich gilt dabei, dass insbesondere bevor der Kolben im Kompressionstakt den oberen Totpunkt erreicht, ein bestimmtes Turbulenzniveau im Zylinder anzustreben ist, so dass eine optimale Vermischung bzw. Verwirbelung des Luft-Kraftstoffgemisches erreicht wird, so dass die Verbrennung unter optimierten Bedingungen vonstatten geht, was letztlich zur Steigerung der Leistung und Effizienz beiträgt. Dabei lässt sich dadurch nicht nur der Treibstoffverbrauch bei gegebener Leistung optimieren, auch die Bildung von Verbrennungsabgasen kann dadurch zusätzlich zu anderen Massnahmen positiv beeinflusst werden, z.B. indem die Bildung schädlicher Gase, wie zum Beispiel die gefürchteten Stickoxide, reduziert oder gar verhindert wird.

Zur Erzeugung von Drall werden daher zum Beispiel bei Viertaktmotoren entsprechend geformte Einlasskanäle benutzt. Derartige Drallkanäle haben allerdings auch immer einen nicht unerheblichen Druckverlust, was das erzeugbare Drallniveau begrenzt.

Bei Motoren von Kraftfahrzeugen ist es daher gebräuchlich, zwischen Kolben und Zylinderdeckel einen sogenannten Quetschspalt vorzusehen, um zusätzliche Bewegungen der Ladeluft im Brennraum zu erzeugen und dadurch die Turbulenz und in Folge die Verbrennung zu verbessern.

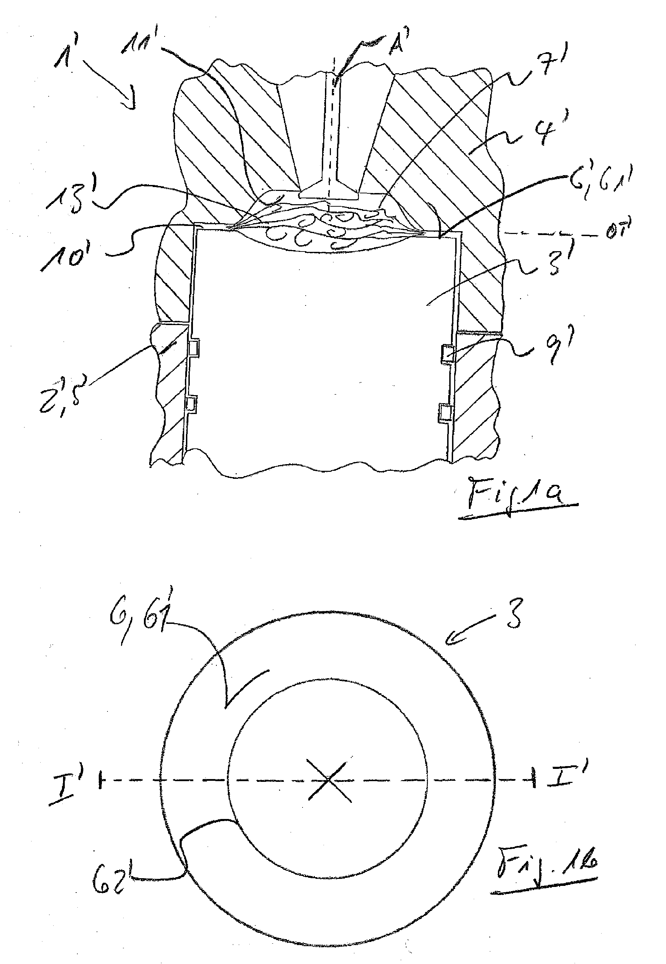

In den Fig. 1 a und Fig. 1b ist zur Erläuterung ein solcher Stand der Technik schematisch dargestellt. In Fig. 1a ist schematisch der obere Teil eines Zylinders eines längsgespülten Zweitakt-Motors gezeigt, der insbesondere mit Dieseltreibstoff betrieben werden kann.

Dargestellt ist ein Zylinder 2', in welchem Zylinder 2' sich ein Kolben 3' im Kompressionstakt in der Nähe des oberen Totpunktes OT' befindet. Der Zylinderdeckel 4', die Zylinderwand 5' und die Kolbenoberseite 6' des Kolbens 3' begrenzen einen Brennraum 7'. Der Kolben 3' hat im Bereich der Mitte der Kolbenoberfläche 6' eine Einbuchtung, die sich in Richtung vom Zylinderdeckel 4' weg erstreckt, und so zusammen mit einer korrespondierenden Einbuchtung im Zylinderdeckel 4', die sich im Bereich des Auslassventils A' erstreckt, einen Teilbrennraum 11' bildet. Dabei kann je nach Anwendung bzw. verwendetem Treibstoff die Einbuchtung in der Kolbenoberfläche 6' auch fehlen oder aber die Kolbenoberfläche 6' kann auch nach aussen in Richtung zum Zylinderdeckel 4' gewölbt sein.

Die Teilfläche 61' der Kolbenoberfläche 6' wird als "Quetschfläche 61'" bezeichnet und die Begrenzungskante 62', die die Quetschfläche 61' zur Einbuchtung in der Kolbenoberfläche 6' hin begrenzt, kennt der Fachmann auch als "Quetschkante 62'". Die Quetschkante 62' ist also zwischen Kolbenoberfläche 6' und Quetschfläche 61' gebildet, und dient zur Beschleunigung der Ladeluft, die durch Kompression des Raumes zwischen Quetschfläche 61' und Kolbenoberfläche 6' durch die Kompressionsbewegung des Kolbens 3' erzeugt wird, in den Teilbrennraum 11', wodurch eine Verwirbelung und ein entsprechender Drall der Gase im Zylinder, also z.B. der Luft oder einem Luft-Treibstoffgemisch erzeugt wird.

Die Quetschfläche 61' am Kolben 6' ist dabei ebenso wie die entsprechende Gegenfläche am Zylinderdeckel 4' im wesentlichen glatt, so dass in Bezug auf die Umfangsrichtung der Quetschkante 62' ein mehr oder weniger gleichmässiger Gasstrom aus dem zwischen Zylinderdeckel 4' und Quetschfläche 61' gebildeten Quetschvolumen heraus in den Teilbrennraum 11' hinein erzeugt wird.

Die Fig. 1a ist dabei ein Schnitt entlang der Schnittlinie I'-I' gemäss Fig. 1b, die den Kolben 3' in Aufsicht auf die Oberfläche 3' mit Quetschfläche 61', Quetschkante 62' und der Einbuchtung in der Kolbenoberfläche zur Bildung des Teilbrennraums 11' zeigt.

Einer der wesentlichen Nachteile dieser Anordnung ist die hohe Symmetrie der aus dem Quetschvolumen in den Teilbrennraum einströmenden Luft. Diese hohe Symmetrie kann einerseits nachteilig sein, wenn die gesamte Brennraumgeometrie eben nicht hoch symmetrisch ist, wie in Fig. 1a bzw. Fig. 1b vereinfacht schematisch dargestellt. Zum anderen werden durch die hohe Symmetrie natürlich die Richtung und Heftigkeit der entstehenden Turbulenzen stark eingeschränkt, so dass, insbesondere auch in Abhängigkeit von der Brennraumgeometrie, die Verwirbelung der sich im Brennraum befindlichen Gase nicht ausreichend ist, so dass keine optimalen Verbrennungsbedingungen hergestellt werden können.

Die Aufgabe der Erfindung ist es daher, eine verbesserte Zylinderanordnung für eine Hubkolbenbrennkraftmaschine, insbesondere für einen Zweitakt- oder Viertakt Dieselmotor, Benzinmotor oder Gasmotor, im Speziellen für einen Zweitakt-Grossdieselmotor zur Verbrennung von Schweröl, sowie eine Hubkolbenbrennkraftmaschine mit einer solchen Zylinderanordnung zur Verfügung zu stellen, bei welcher die Ladungsbewegung der im Zylinder für die Verbrennung zur Verfügung gestellten Gase und die mit der Ladungsbewegung verbundenen Turbulenzen optimiert ist, wobei insbesondere ein wesentlich höheres Turbulenzniveau erreichbar ist und die Turbulenzverteilung im Brennraum gezielt einstellbar ist.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit eine Zylinderanordnung für eine Hubkolbenbrennkraftmaschine mit mindestens einem Zylinder, in welchem Zylinder ein Kolben zwischen einem oberen Totpunkt und einem unteren Totpunkt hin- und herbewegbar angeordnet ist. Im Zylinder ist durch einen Zylinderdeckel, eine Zylinderwand, und eine Kolbenoberfläche des Kolbens, ein Brennraum umfassend einen Teilbrennraum begrenzt, wobei der Brennraum gegen eine Unterseite des Kolbens durch eine mindestens einen Kolbenring umfassende Kolbenringpackung abgedichtet ist. Erfindungsgemäss ist ein Druckraum und ein Strömungskanal zur Bildung einer Gasströmung zwischen dem Druckraum und dem Teilbrennraum vorgesehen.

Wesentlich für die Erfindung ist somit, dass innerhalb des Zylinders, das heisst entweder innerhalb oder ausserhalb des Brennraums, ein Druckraum geschaffen wird, in welchem im Betriebszustand der Hubkolbenbrennkraftmaschine zumindest während eines Kompressionshubs des Kolbens und / oder zumindest im Bereich des oberen Totpunktes der Kolbenbewegung ein anderer Gasdruck, insbesondere ein höherer Gasdruck durch die Bewegung des Kolbens geschaffen wird, als derjenige Gasdruck, der im Teilbrennraum herrscht. Durch die erfindungsgemässe Verbindung des Teilbrennraums mit dem Druckraums über den Strömungskanal ist eine starke, einstellbare Gasströmung aus dem Druckraum in den Teilbrennraum herstellbar, so dass im Teilbrennraum eine in Richtung und Stärke einstellbare Gasströmung entsteht, die zu einer intensiveren Ladungsbewegung bzw. zu einer verstärkten Turbulenz im Teilbrennraum Nahe dem oberen Totpunkt der Kolbenbewegung führt. Das führt zu einer deutlich besseren Durchmischung des Kraftstoff-Luftgemischs, wodurch die Verbrennung optimierbar ist, was zu einer höheren Leistung der Hubkolbenbrennkraftmaschine bei gleichem Verbrauch führt, bzw. wodurch bei gleicher Leistung der Treibstoffverbrauch absenkbar ist, und gleichzeitig eine Reduktion der Schadstoffe erreichbar ist.

Die bessere Durchmischung der Gase im Zylinder wird dabei dadurch erreicht, dass ein Gasvolumen im Druckraum durch die Bewegung des Kolbens zumindest in der Nähe des oberen Totpunktes der Kolbenbewegung ganz oder teilweise abgeschnürt und / oder verkleinert bzw. komprimiert wird, wobei die prozentuale Änderung bzw. Kompression dieses Volumens im Druckraum aufgrund der Bewegung des Kolbens grösser ist, als die korrespondierende Volumenänderung bzw. Kompression im Teilbrennraum. Dies führt im Kompressionshub im Druckraum zu einem steileren Druckanstieg in Abhängigkeit von der Kolbenstellung als im Teilbrennraum, und damit zu einer Ausgleichsströmung der Gase vom Druckraum durch den Strömungskanal in den Teilbrennraum. Dabei kann die Strömungsgeschwindigkeit der Gase bei geeigneter Dimensionierung des Druckraums und / oder der Strömungsleitung und / oder des Teilbrennraums durchaus in die Nähe der Schallgeschwindigkeit kommen, so dass besonders starke Turbulenzen im Teilbrennraum erzeugbar sind.

Neben dem deutlich höheren Niveau an Turbulenzen ist als weiterer Vorteil der vorliegenden Erfindung hervorzuheben, dass durch geeignete geometrische Ausgestaltung der Komponenten, insbesondere des Strömungskanals, die entstehende Gasströmung gezielt ausgerichtet werden kann.

Dadurch ist es zum Beispiel möglich, bei einem entsprechenden Motor, insbesondere bei einem Zweitakt-Grossdieselmotor die Düsenköpfe, und / oder die Ventile, und / oder andere Komponenten durch die Gasströmung zum Beispiel zu kühlen. Durch die Wahl einer geeigneten Baugeometrie können auch gezielt bestimmte Geometrien der durch die Gasströmung entstehenden Wirbel und Turbulenzen hergestellt werden. So können zum Beispiel vorteilhaft torusförmige Wirbel bzw. Turbulenzen generiert werden, bzw. generell Turbulenzen vorgebbarer Geometrie an einem gewünschten Ort im Brennraum, z.B. an einem Ort der entfernt von der Zylinderwand ist, konzentriert werden. Beispielsweise dort, wo der Brennstoff hauptsächlich umgesetzt wird. Im Gegensatz dazu ist es bei den bekannten Motoren nicht möglich eine starke Turbulenz konzentriert im Zentrum oder an einem anderen Ort des Brennraums zu erzeugen, weil die Geschwindigkeit der reibungsbehafteten Drallströmung im Wirbelkern gegen Null geht.

In einem für die Praxis besonders wichtigen Ausführungsbeispiel einer erfindungsgemässen Zylinderanordnung, ist der Kolben derart als Stufenkolben mit einem Basiskolben und einem Kolbenkopf ausgebildet, dass der Stufenkolben mit einer stufenförmigen Ausnehmung im Zylinderdeckel derart zusammenwirkt, dass in einem Betriebszustand in der Nähe des oberen Totpunktes der Druckraum in Form eines im Volumen veränderbaren Ringraums zwischen dem Kolbenkopf und der Zylinderwand ausgebildet ist. Das heisst, der Druckraum ist in der Nähe des oberen Totpunktes, abgesehen von der Verbindung über den Strömungskanal, räumlich vom Teilbrennraum getrennt. Da das Volumen des so gebildeten Druckraums bevorzugt deutlich kleiner ist, als das Volumen des Teilbrennraums, ist die prozentuale Änderung des Volumens des Druckraums aufgrund der Kompressionsbewegung des Kolbens grösser als die korrespondierende Änderung des Volumens des Teilbrennraums, so dass im Druckraum ein im Vergleich zum Teilbrennraum höherer Gasdruck entsteht, wodurch eine Gasströmung vom Druckraum über den Strömungskanal in den Teilbrennraum aufgebaut wird.

Der Strömungskanal kann dabei zum Beispiel durch einen Strömungsspalt zwischen einer Umfangsfläche des Stufenkolben und der Zylinderwand, insbesondere zwischen einer Umfangsfläche des Kolbenkopfs und der Zylinderwand ausgebildet sein.

In einem anderen Ausführungsbeispiel ist der Strömungskanal als Strömungsfurche oder Strömungsrille an der äusseren Umfangsfläche des Kolbenkopfes ausgebildet und / oder der Strömungskanal ist beispielsweise als Strömungsfurche in der Zylinderwand ausgebildet.

Besonders bevorzugt kann der Strömungskanal auch als Strömungsleitung zwischen dem Ringraum und dem Teilbrennraum ausgebildet sein, wobei die Strömungsleitung vorteilhaft durch die Zylinderwand und / oder durch den Zylinderdeckel und / oder durch den Stufenkolben geführt sein kann. Diese speziellen Ausführungsformen mit röhrenartigen Strömungskanälen, die durch den Kolben und / oder durch die Zylinderwand und / oder durch den Zylinderdeckel geführt sind, eignen sich in besonderer Weise um den Gasstrom gezielt auf bestimmte Orte innerhalb des Brennraums, bzw. des Teilbrennraums zu richten und so z.B. Turbulenzen an vorgebbaren Orten und / oder mit vorgebbaren Geometrien im Brennraum zu erzeugen.

Dabei versteht es sich von selbst, dass je nach Anwendung oder verwendetem Treibstoff eine dem Zylinderdeckel zugewandte Oberfläche des Kolbenkopfes in geeigneter Weise geformt sein kann. So kann diese Oberfläche des Kolbenkopfes zum Beipiel auch eine vom Zylinderdeckel weg gerichtete Einbuchtung aufweisen, oder eine dem Zylinderdeckel zugewandte Ausbeulung besitzen. Auch kompliziert geformte Kolbenoberflächen wo zum Beispiel Einbuchtungen und Ausbeulungen kombiniert sind, sind möglich. Das trifft selbst verständlich auf alle Kolbenoberflächen von Zylinderanordnungen gemäss der vorliegenden Erfindung, bei welchen solche speziellen Ausführungen der Zylinderoberfläche vorteilhaft vorgesehen werden können.

In einem weiteren Ausführungsbeispiel der vorliegenden Erfindung ist der Teilbrennraum als Brennraumausnehmung im Kolben derart ausgebildet, dass der Kolben mit einem in den Brennraum hineinragenden Vorsprung des Zylinderdeckels so zusammenwirkt, dass in einem Betriebszustand in der Nähe des oberen Totpunktes der Druckraum in Form eines im Volumen veränderbaren Druckraums zwischen dem Zylinderdeckel und der Kolbenoberfläche des Kolbens ausgebildet ist. Das heisst, der Druckraum wird jetzt nicht unterhalb der Kolbenoberfläche, neben dem Kolben zwischen Zylinderwand und einer Umfangsfläche des Kolbens gebildet, sondern oberhalb des Kolbens zwischen einem vorgebbaren Bereich der Kolbenoberfläche und einem korrespondierenden Oberflächenbereich des Zylinderdeckels.

In dem Fall ist der Strömungskanal bevorzugt als Strömungsleitung zwischen dem Druckraum und dem als Brennraumausnehmung ausgestalteten Teilbrennraum ausgebildet, wobei die Strömungsleitung bevorzugt durch den Zylinderdeckel und / oder durch den Stufenkolben hindurch geführt ist.

Selbstverständlich ist es auch möglich, dass der Strömungskanal als Strömungsfurche an einer Umfangsfläche der Brennraumausnehmung am Kolben ausgebildet ist, oder aber dass der Strömungskanal als Strömungsfurche an einer Umfangsfläche des Vorsprungs des Zylinderdeckels ausgebildet ist.

Bei einem anderen Ausführungsbeispiel der vorliegenden Erfindung sind der Druckraum und der Strömungskanal zur Bildung einer Gasströmung zwischen dem Druckraum und dem Teilbrennraum als Ausnehmung in der Oberfläche des Kolbens vorgesehen. Bei dieser Ausführungsform ist der Druckraum, anders als zum Beispiel bei Verwendung des Stufenkolbens, nicht räumlich vom Teilbrennraum getrennt, sondern der Druckraum ist nur in Bezug auf das Gasdruckniveau vom Teilbrennraum getrennt. Vielmehr wird bei der Kompressionsbewegung des Kolbens zusätzlich Gas in die als Oberflächenausnehmung ausgestalteten Druckraum gepresst, wodurch im Druckraum ein im Vergleich zum Teilbrennraum erhöhter Druck erzeugt wird, was wiederum eine Gasströmung vom Druckraum über den Strömungskanal in den Teilbrennraum zur Folge hat.

Dabei versteht sich, dass der Druckraum und der Strömungskanal zur Bildung einer Gasströmung zwischen dem Druckraum und dem Teilbrennraum in einem anderen Ausführungsbeispiel auch als Ausnehmung in einer dem Brennraum zugewandten Oberfläche des Zylinderdeckels vorgesehen sein kann.

Im Speziellen ist die Hubkolbenbrennkraftmaschine, die mit einer erfindungsgemässen Zylinderanordnung ausgerüstet ist, ein Zweitakt- oder Viertakt-Verbrennungsmotor, insbesondere ein Zweitakt- oder Viertakt Dieselmotor, Benzinmotor oder Gasmotor, im Speziellen ein Zweitakt-Grossdieselmotor zur Verbrennung von Schweröl.

Ausserdem betrifft die Erfindung neben der Zylinderanordnung als solche, auch eine Hubkolbenbrennkraftmaschine, insbesondere einen Zweitakt- oder Viertakt Dieselmotor, Benzinmotor oder Gasmotor, im Speziellen einen Zweitakt-Grossdieselmotor zur Verbrennung von Schweröl, mit einer erfindungsgemässen Zylinderanordnung.

Die Erfindung wird im Folgenden an Hand der schematischen Zeichnung näher erläutert. Es zeigen:
- Fig. 1a: eine bekannte Zylinderanordnung mit Quetschkante;
- Fig. 1 b: eine Ansicht auf die Oberfläche des Kolbens gemäss Fig. 1a;
- Fig. 2: ein erfindungsgemässes Ausführungsbeispiel mit Stufenkolben;
- Fig. 3a: ein zweites Ausführungsbeispiel mit Stufenkolben;
- Fig. 3b: der Kolben gemäss Fig. 3a mit Strömungsfurchen;
- Fig. 4: ein drittes Ausführungsbeispiel mit Stufenkolben und Strömungsleitung;
- Fig. 5: ein erstes Ausführungsbeispiel mit einer Brennraumausnehmung und Strömungsleitung;
- Fig. 6: ein zweites Ausführungsbeispiel gemäss Fig. 5 mit Strömungsfurche;
- Fig. 7a: Ansicht auf eine Kolbenoberfläche mit einem Druckraum und einem Strömungskanal als Ausnehmung in Kolbenoberfläche;
- Fig. 7b: Zylinderanordnung mit einem Kolben gemäss Fig. 7a im Schnitt;
- Fig. 8a: ein zweites Ausführungsbeispiel gemäss Fig. 7a;
- Fig. 8b: Zylinderanordnung mit einem Kolben gemäss Fig. 8a im Schnitt;
- Fig. 9a: Gasgeschwindigkeit in Abhängigkeit vom Kurbelwinkel;
- Fig. 9b: Impulskraft des Gasstroms in Abhängigkeit vom Kurbelwinkel.

Die Fig. 1a und Fig. 1b zeigen zur Erläuterung einen bekannten Stand der Technik. Um den Stand der Technik von der vorliegenden Erfindung zu unterscheiden, wurden die Bezugzeichen in Fig. 1a und Fig.1b mit einem Hochkomma versehen, während die Bezugszeichen in den übrigen Figuren, die sich sämtlich auf die Erfindung beziehen, kein Hochkomma tragen. Da die Fig. 1a und 1b bereits eingangs ausführlich besprochen wurden, erübrigt sich hier eine weitere Diskussion.

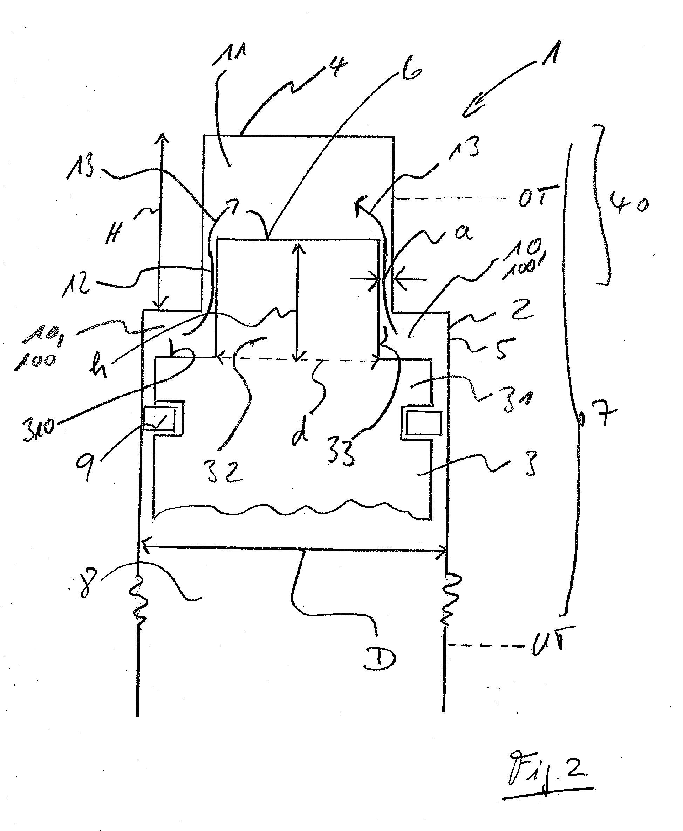

Fig. 2 zeigt in einer stark schematischen Darstellung ein sehr einfaches Ausführungsbeispiel einer erfindungsgemässen Zylinderanordnung, die im folgenden gesamthaft mit dem Bezugszeichen 1 bezeichnet wird.

Die erfindungsgemässe Zylinderanordnung 1 gemäss Fig. 2 ist zum Einsatz in einer Hubkolbenbrennkraftmaschine geschaffen, die mindestens einen Zylinder 2 mit Durchmesser D umfasst, in welchem Zylinder 2 ein Kolben 3 zwischen einem oberen Totpunkt OT und einem unteren Totpunkt UT hin- und herbewegbar angeordnet ist. Im Zylinder 2 ist durch einen Zylinderdeckel 4, eine Zylinderwand 5, und eine Kolbenoberfläche 6 des Kolbens 3, ein Brennraum 7 begrenzt, wobei der Brennraum 7 mindestens einen Teilbrennraum 11 umfasst. Der Brennraum 7 ist gegen eine Unterseite 8 des Kolbens 3 in an sich bekannter Weise durch eine mindestens einen Kolbenring 9 umfassende Kolbenringpackung abgedichtet. Weitere wesentliche Komponenten der Zylinderanordnung 1, wie z.B. Gaswechselventile, Einspritzdüsen, Zündkerzen usw. sind nicht dargestellt, da anhand der Fig. 2 hauptsächlich das erfindungsgemässe Prinzip erläutert werden soll, dass in seinen speziellen Ausgestaltungen sowohl für Zweittaktals auch für Viertaktmotoren anwendbar ist und sowohl für selbstzündende Motoren, wie Dieselmotoren als auch für Motoren Anwendung finden kann, die z.B. über ein Zündmittel wie eine Zündkerze gezündet werden. Ausserdem ist die Erfindung zum Einsatz in Motoren mit und ohne Gaswechselventile, also mit und ohne Einlass- und / oder Auslassventile geeignet.

Erfindungsgemäss ist ein Druckraum 10, 100 und ein Strömungskanal 12 zur Bildung einer Gasströmung 13 zwischen dem Druckraum 10, 100 und dem Teilbrennraum 11 vorgesehen.

In dem Ausführungsbeispiel der Fig. 2 ist der Kolben 3 als Stufenkolben 30 mit einem Basiskolben 31 und einem Kolbenkopf 32 der Breite d und der Höhe h ausgebildet. Im Zylinderdeckel 4 ist eine stufenförmige Ausnehmung 40 der Höhe H vorgesehen, die derart ausgestaltet ist, dass der Stufenkolben 30 mit der stufenförmigen Ausnehmung 40 im Zylinderdeckel 4 derart zusammenwirkt, dass in der Nähe des oberen Totpunktes OT der Druckraum 10 in Form eines im Volumen veränderbaren Ringraums 100 zwischen dem Kolbenkopf 32, einer Oberfläche 310 des Basiskolbens und der Zylinderwand 5 ausgebildet ist.

Bei dem einfachen Beispiel der Fig. 2 ist der Strömungskanal 12 durch einen Strömungsspalt 12 der Breite a zwischen einer Umfangsfläche 33 des Kolbenkopfs 32 und der Zylinderwand 5 ausgebildet.

Wenn sich im Betriebszustand der Hubkolbenbrennkraftmaschine der Kolben 3 im Kompressionshub in Richtung zum oberen Totpunkt OT bewegt, werden, sobald der Kolbenkopf 32 in die Ausnehmung 40 des Zylinderdeckels eintritt, der Druckraum 10 als Ringraum 100 und der Teilbrennraum 11 gebildet und räumlich voneinander getrennt. Bei der weiteren Bewegung des Kolbens 3 in Richtung zum oberen Totpunkt OT wird das im Ringraum 100 und das im Teilbrennraum 11 eingeschlossene Gas, also z.B. die Ladeluft, jeweils unterschiedlich stark komprimiert.

Dabei ist die prozentuale Änderung des Volumens des Ringraums 100 in Abhängigkeit vom Kurbelwinkel grösser als die entsprechende prozentuale Änderung des Volumens des Teilbrennraums 11. Daher baut sich mit zunehmender Kompression im Ringraum 100 ein grösserer Druck auf als im Teilbrennraum 11. Dadurch entsteht über den Strömungskanal 12, der im Beispiel der Fig. 2 einfach durch die umlaufende Spaltfläche zwischen dem Kolbenkopf 32 und der Zylinderwand 5 gebildet ist, eine Ausgleichsströmung 13 vom Ringraum 100 in den Teilbrennraum 11, wodurch im Teilbrennraum 11 entsprechende starke Turbulenzen entstehen, die eine entsprechend gute Durchmischung im Teilbrennraum 11 garantieren, so dass z.B. ein eingespritzter Kraftstoff deutlich besser mit der Ladeluft verwirbelt bzw. vermischt wird, als dies von den Zylinderanordnungen aus dem Stand der Technik bekannt ist.

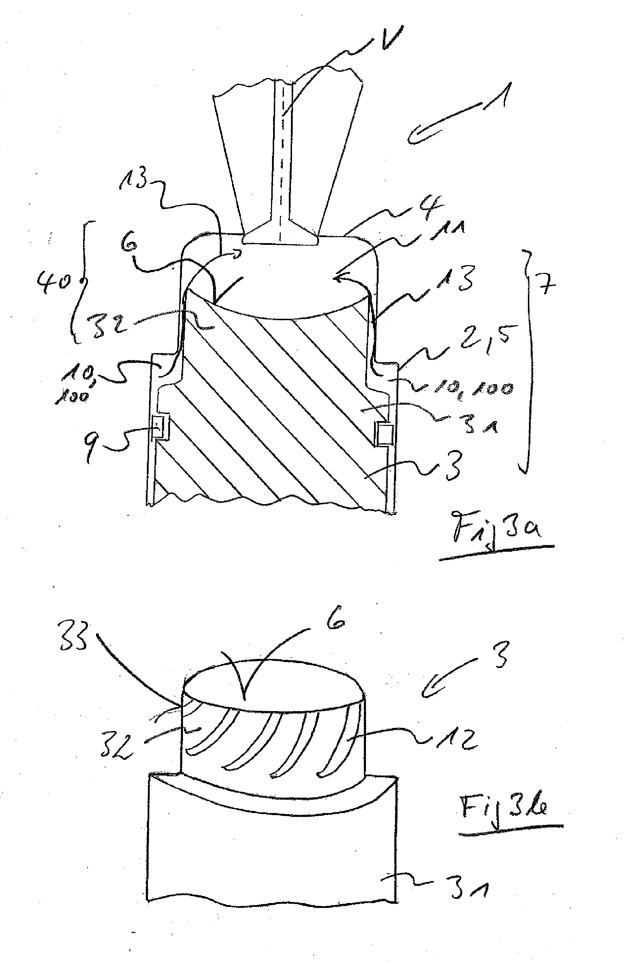

In Fig. 3a ist ein zweites Ausführungsbeispiel mit Stufenkolben schematisch dargestellt. Der Zylinder 3 mit Stufenkolben 30 gehört zu einem längsgespülten Zweitakt-Grossdieselmotor der mit Schweröl als Treibstoff betrieben wird. Im Zylinderkopf ist zentral ein Auslassventil V angeordnet. Die ebenfalls im Zylinderkopf angeordneten Einspritzdüsen sind im Schnittbild der Fig. 3a nicht zu sehen.

Der wesentliche Unterschied zu dem in Fig. 2 diskutierten Ausführungsbeispiel besteht darin, dass gemäss Fig. 3b an der äusseren Umfangsfläche 33 des Kolbenkopfs 32 Strömungsfurchen 12 eingearbeitet sind, durch die die Ladeluft aus dem Ringraum 100 unter erhöhtem Gasdruck in den Teilbrennraum 11 strömt bzw. gepresst wird. In dem speziellen Ausführungsbeispiel der Fig. 3a bzw. Fig. 3b haben die Strömungsfurchen 12 einen gebogenen Verlauf, wodurch die durch die Strömungsfurchen 12 durchströmende Ladeluft in Bezug auf eine Längsachse des Stufenkolbens 30 einen zusätzlichen Drall erhält, so dass die Ladeluft im Teilbrennraum 11 noch besser verwirbelt. Es versteht sich, dass die Strömungsfurchen 12 auch einen nicht gebogenen Verlauf haben können oder einige der Strömungsfurchen 12 einen gebogenen Verlauf haben können und an ein und demselben Stufenkolben 30 andere Strömungsfurchen 12 einen anderen gebogenen Verlauf oder z.B. in Bezug auf die Längsachse des Kolbens 30 einen geraden Verlauf haben können. Der Fachmann weiss, wie die genaue Ausgestaltung der Strömungsfurchen 12 jeweils an die konkreten Anforderungen geeignet anzupassen ist.

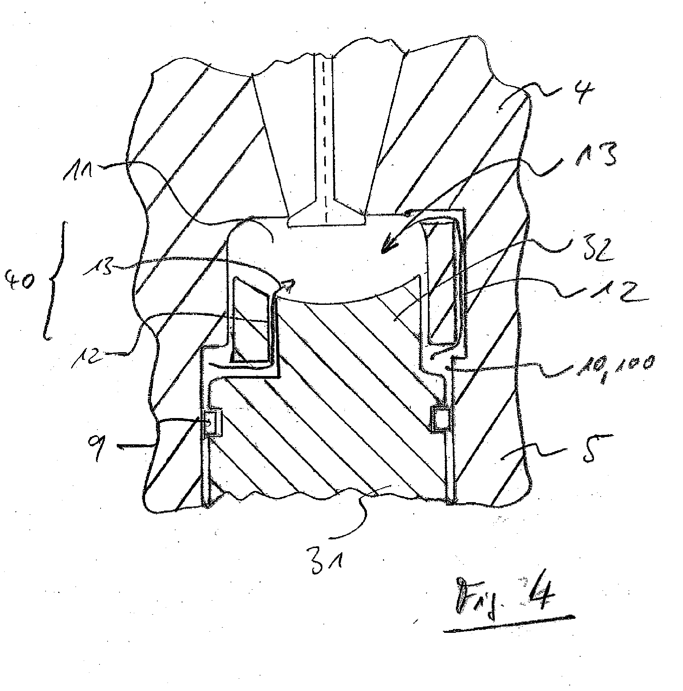

In Fig. 4 ist ein drittes Ausführungsbeispiel mit Stufenkolben und Strömungsleitung dargestellt. Das Ausführungsbeispiel der Fig. 4 unterscheidet sich von demjenigen der Fig. 3a bzw. 3b dadurch, dass der Strömungskanal 12 nicht als Strömungsfurche 12, sondern als Strömungsleitung 12 zwischen dem Ringraum 100 und dem Teilbrennraum 11 ausgebildet ist. Dabei sind in dem speziellen Ausführungsbeispiel der Fig. 4 zwei verschiedene Strömungsleitungen 12 vorgesehen. Die Strömungsleitung 12 im darstellungsgemäss linken Teil der Zylinderanordnung 1 ist als Bohrung 12 durch das Innere des Kolbenkopfes 32 geführt, während die zweite Strömungsleitung 12 im darstellungsgemäss rechten Teil der Zylinderanordnung 1 als Bohrung 12 durch die Zylinderwand 5 und den Zylinderdeckel 4 geführt ist.

Diese Führung der Strömungsleitung 12 eignet sich in besonderem Masse dazu, die Gasströmung 13 aus dem Ringraum 100 in den Teilbrennraum 11 sehr gezielt an einen vorgebbaren Ort im Teilbrennraum 11 zu befördern und ist darüber hinaus in besonderem Masse dazu geeignet, eine Turbulenz mit vorgebbarer Geometrie, zum Beispiel eine torusförmige Geometrie in der Mitte des Teilbrennraums 11 zu erzeugen.

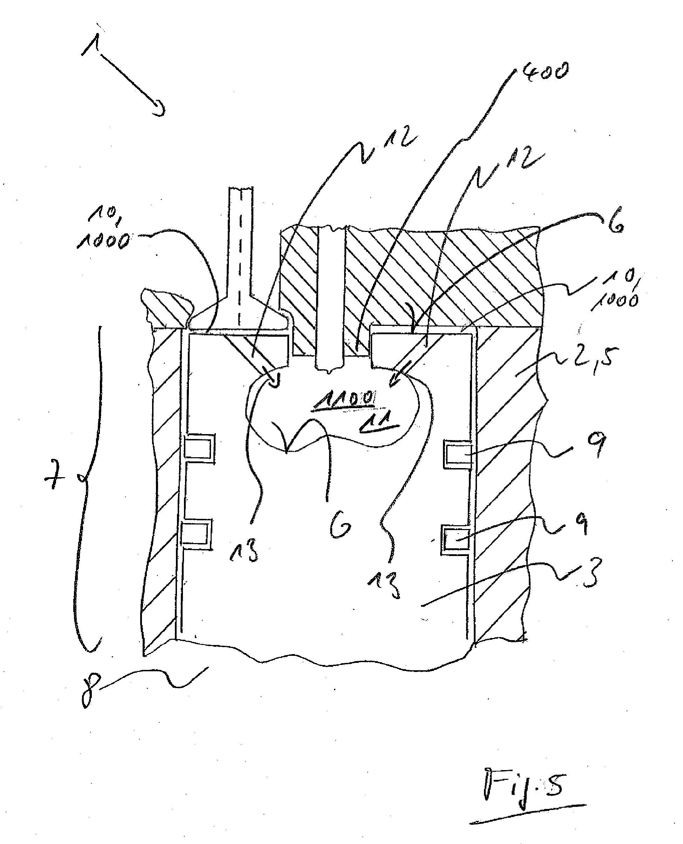

In Fig. 5 ist ein erstes Ausführungsbeispiel einer erfindungsgemässen Zylinderanordnung 1 mit einer Brennraumausnehmung 1100 in schematischer Weise dargestellt.

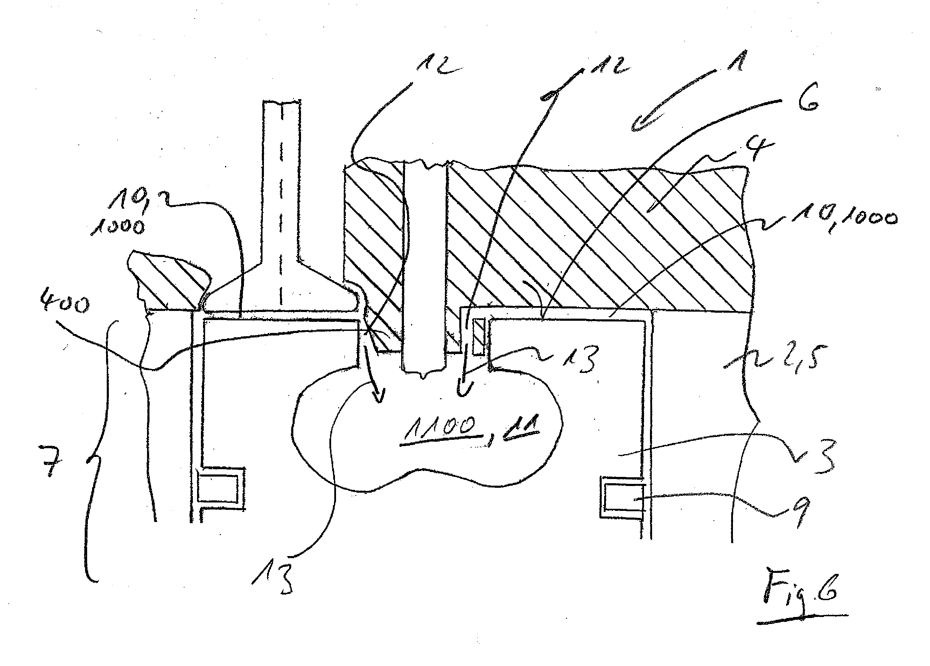

Der Teilbrennraum 11 ist in dem Ausführungsbeispiel gemäss Fig. 6 als Brennraumausnehmung 1100 im Kolben 3 derart ausgebildet, dass der Kolben 3 mit einem in den Brennraum 7 hineinragenden Vorsprung 400 des Zylinderdeckels 4 so zusammenwirkt, dass in einem Betriebszustand in der Nähe des oberen Totpunktes OT der Druckraum 10 in Form eines im Volumen veränderbaren Druckraums 1000 zwischen dem Zylinderdeckel 4 und der Kolbenoberfläche 6 des Kolbens 3, räumlich getrennt vom Teilbrennraum 1100 ausgebildet ist.

Der Strömungskanal 12 ist dabei als Strömungsleitung 12 zwischen dem Druckraum 1000 und dem als Brennraumausnehmung 1100 ausgestalteten Teilbrennraum 11 ausgebildet und durch den Kolben 3 hindurch geführt. Auch diese Ausführungsform eignet sich besonders gut dazu die Gasströmung 13 sehr gezielt in den Teilbrennraum 11 einzubringen und an einem vorgebbaren Ort im Inneren des Teilbrennraums 11 eine Turbulenz vorgebbarer Stärke und Geometrie zu erzeugen.

In Fig. 6 ist eine Variante des Ausführungsbeispiels gemäss Fig. 5 dargestellt. Hier ist im darstellungsgemäss rechten Teil der Zylinderanordnung 1 eine Strömungsleitung 2 durch den Zylinderdeckel 4 geführt und im darstellungsgemäss linken Teil ist der Strömungskanal 12 als Strömungsfurche an einer Umfangsfläche des in den Brennraum 7 hineinragenden Vorsprung 400 angeordnet. Es versteht sich von selbst, dass die Strömungsfurche auch an einer Umfangsfläche der Brennraumausnehmung 1100 am Kolben 3 ausgebildet sein kann und dass die verschiedenen gezeigten Ausführungsvarianten von Strömungskanälen 12 auch an ein und demselben Kolben 3 gleichzeitig realisiert sein können, wenn die Anforderungen dies verlangen. Oder es kann auch jeweils nur eine der gezeigten Varianten, zum Beispiel nur ein oder mehrere Strömungsleitungen durch den Zylinderdeckel, oder nur eine oder mehrere Strömungsfurchen an ein und demselben Kolben vorgesehen sein.

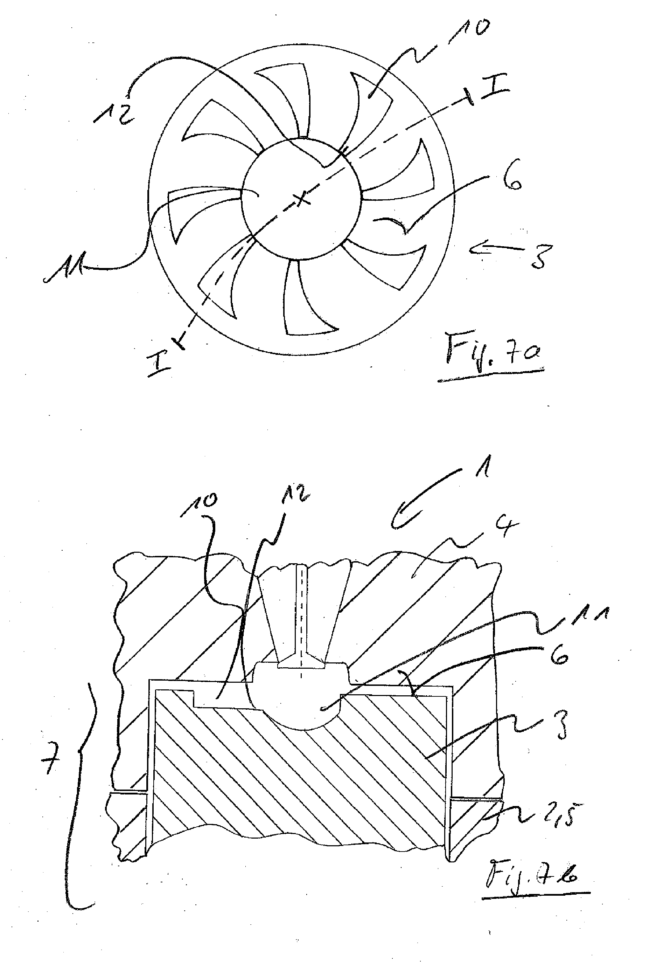

Die Fig. 7a bis Fig. 8b illustrieren eine weitere Variante erfindungsgemässer Ausführungsbeispiele, bei welchen der Druckraum 10 nicht räumlich vom Teilbrennraum 11, sondern lediglich geometrisch bzw. in Bezug auf das Gasdruckniveau vom Teilbrennraum 11 getrennt ist.

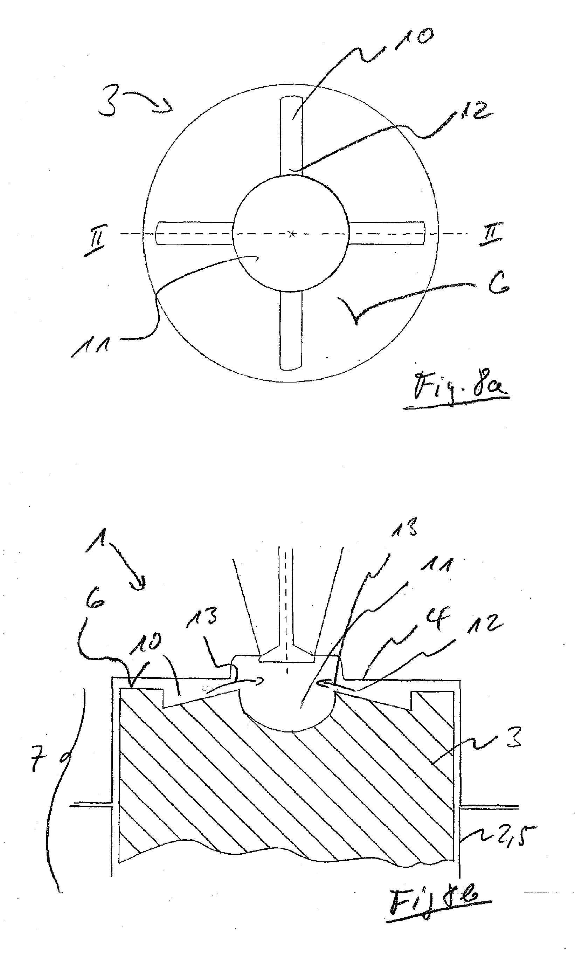

Der Druckraum 10 und der Strömungskanal 12 zur Bildung der Gasströmung 13 zwischen dem Druckraum 10 und dem Teilbrennraum 11 sind, wie den Fig. 7a und Fig. 8a zu entnehmen ist, als Ausnehmungen in der Oberfläche 6 des Kolbens 3 vorgesehen.

Bei dem Beispiel gemäss Fig. 7a ist der Druckraum 10 bzw. der Strömungskanal 12 spiralartig in die Oberfläche 6 des Kolbens eingearbeitet, wodurch eine zusätzliche Drallwirkung der Gasströmung 13 im Teilbrennraum 11 erreichbar ist. Dabei haben der Druckraum 10 und der Strömungskanal 12 eine konstante Tiefe in der Oberfläche des Kolbens 3, wie sehr gut der Fig. 7b zu entnehmen ist, die einen Schnitt durch die Zylinderanordnung 1 entlang der Schnittlinie I-I gemäss Fig. 7a zeigt.

Bei dem Ausführungsbeispiel gemäss Fig. 8a ist der Druckraum 10 bzw. der Strömungskanal 12 nicht spiralartig in der Oberfläche 6 vorgesehen, sondern verlaufen radial in Richtung zur Mitte des Teilbrennraums 11. Darüber hinaus hat der Querschnitt des Druckraums 10 bzw. des Strömungskanals 12 nicht eine konstante Tiefe, wie in Fig. 7b gezeigt, sondern einen rampenförmigen Verlauf, mit in Richtung zum Teilbrennraum 11 abnehmender Tiefe in der Oberfläche 6 des Kolbens 3.

Der rampenförmige Verlauf ist sehr anschaulich in Fig. 8b dargestellt, die einen Schnitt entlang der Schnittlinie II-II gemäss Fig. 8a darstellt. Dadurch, dass der Querschnitt des Druckraums 10 bzw. des Strömungskanals 12 in Richtung zum Teilbrennraum 11 immer mehr verringert wird, arbeitet der Strömungskanal 12 als Düse, die den Gasstrom 13 unter hoher Geschwindigkeit in den Teilbrennraum 11 verdüst und so die Verwirbelung der Ladeluft im Teilbrennraum 11 positiv beeinflusst.

Dabei versteht der Fachmann ohne weiteres, dass der Druckraum 10 und der Strömungskanal 12 zur Bildung der Gasströmung 13 zwischen dem Druckraum 10 und dem Teilbrennraum 11 anstatt als Ausnehmungen in der Oberfläche 6 des Kolbens 3 auch als Ausnehmung in einer dem Brennraums 7 zugewandten Oberfläche des Zylinderdeckels 4 vorgesehen sein kann, oder zum Beispiel gegeneinander versetzt gleichzeitig in der Oberfläche des Zylinderdeckels 4 und der Oberfläche 6 des Kolbens 3 vorgesehen sein kann.

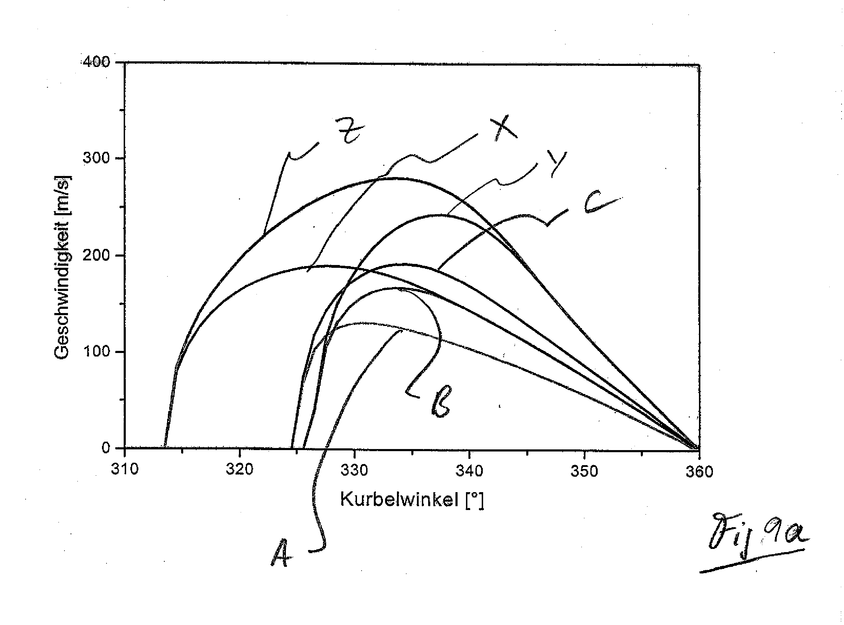

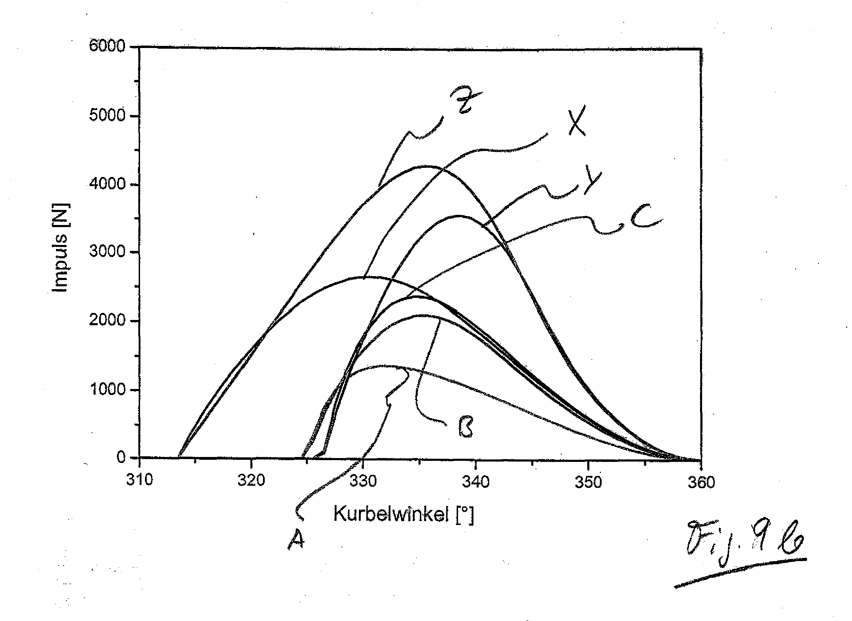

Die Fig. 9a und Fig. 9b demonstrieren schliesslich eindrucksvoll anhand der Gasgeschwindigkeit des Gasstroms 13 bzw. anhand der Impulskraft des Gasstroms 13 wie sich durch geeignete Wahl von verschiedenen relevanten geometrischen Parametern der erfindungsgemässen Zylinderanordnung 1 die Turbulenzen bzw. die Verwirbelung der Gase im Brennraum 7 optimieren lassen.

In Fig. 9a ist in Abhängigkeit vom Kurbelwinkel der Verlauf einer mittleren Geschwindigkeit des Gasstroms 13 für insgesamt sechs verschiedene geometrische Parametersätze gezeigt, wie sie in der nachfolgenden Tabelle 1 übersichtsartig zusammengefasst sind. In Fig. 9b ist für dieselben Parametersätze die zugehörige mittlere Impulskraft des Gasstroms 13 gegen den Kurbelwinkel aufgetragen.

Die Kurven gemäss Fig. 9a und Fig. 9b wurden rechnerisch für einen RTA 96C Motor der Anmelderin errechnet, wobei ein Hub des Kolbens von 2.5m, eine Länge der Pleuelstange von 2.28m, und ein Durchmesser des Zylinder von 0.96m zugrunde gelegt wurde.

**Tabelle 1: Parameter zur Berechnung der Kurven gemäss Fig. 9a und Fig. 9b.**

| **Kurve** | **Breite a des Strömungskanals** | **Durchmesser d des Kolbenkopfes** | **Höhe H der Ausnehmung** |
|---|---|---|---|
| **A** | 0.0015m | 0.90m | 0.3 m |
| **B** | 0.0015m | 0.88 m | 0.3 m |
| **C** | 0.0010m | 0.90m | 0.3 m |
| **X** | 0.0015m | 0.88 m | 0.4 m |
| **Y** | 0.0010m | 0.88 m | 0.3 m |
| **Z** | 0.0010m | 0.88 m | 0.4 m |

Die sechs verschiedenen Kurven A, B, C, X, Y, und Z der Fig. 9a und Fig. 9b ergeben sich dann unter Verwendung eines Stufenkolbens 30 bei Wahl der in Tabelle 1 angegebenen zugehörigen Parameter. Dabei ist a die Breite des Strömungskanals 12, der sowohl als Strömungsspalt, als auch als Strömungsleitung wie oben beschrieben ausgeführt sein kann, d ist der Durchmesser des Kolbenkopfes 32 und H die Höhe der stufenförmige Ausnehmung 40 im Zylinderdeckel 4.

Die Kurven gemäss Fig. 9a und Fig. 9b demonstrieren eindrucksvoll, wie sich durch geeignete Wahl der geometrischen Parameter bei einer erfindungsgemässen Zylinderanordnung 1 das Turbulenzniveau im Zylinder, das wesentlich durch die mittlere Geschwindigkeit des Gasstroms 13 und der dazugehörigen mittleren Impulskraft bestimmt ist, optimieren lässt.

So setzt bei den Kurven X und Z der Gastrom 13 in den Teilbrennraum 11 bereits sehr früh bei einem Kurbelwinkel von ca. 313 Grad ein, was hauptsächlich darauf zurückzuführen ist, dass eine etwas grössere Höhe H der Ausnehmung 40 im Zylinderdeckel 4 gewählt wurde, so dass der Kolbenkopf 32 bereits bei einem Kurbelwinkel von ca. 313 Grad in die Ausnehmung 40 eintritt und den Druckraum 10 vom Teilbrennraum 11 abtrennt.

Die Wahl einer kleineren Breite a des Strömungskanals bewirkt deutlich eine höhere mittlere Geschwindigkeit des Gasstroms 13 und eine entsprechend höhere mittlere Impulskraft, was einer entsprechenden Verstärkung der Turbulenzen bzw. Verwirbelungen im Brennraum 7 führt.

Qualitativ und in der Tendenzen treffen die Ergebnisse der Simulationen gem. Fig. 9a und Fig. 9b auf alle Ausführungsformen der vorliegenden Erfindung zu und der Fachmann weiss, wie er die Ergebnisse auf die verschiedenen Ausführungsformen geeignet zu übertragen hat.

Es versteht sich, dass alle in dieser Anmeldung beschriebenen erfindungsgemässen Ausführungsbeispiele lediglich exemplarisch zu verstehen sind und, wie sie im Rahmen der vorliegenden Anmeldung beschrieben bzw. nahegelegt sind, entweder allein oder in allen geeigneten Kombinationen in speziellen Ausführungsbeispielen erfindungsgemässer Zylinderanordnungen vorgesehen sein können, so dass auch alle geeigneten Kombinationen der in dieser Anmeldung beschriebenen Ausführungsformen durch die vorliegenden Erfindung erfasst und abgedeckt sind.

## Patentansprüche

1. Zylinderanordnung für eine Hubkolbenbrennkraftmaschine mit mindestens einem Zylinder (2), in welchem Zylinder (2) ein Kolben (3) zwischen einem oberen Totpunkt (OT) und einem unteren Totpunkt (UT) hin- und herbewegbar angeordnet ist, wobei im Zylinder (2) durch einen Zylinderdeckel (4), eine Zylinderwand (5), und eine Kolbenoberfläche (6) des Kolbens (3), ein Brennraum (7) umfassend einen Teilbrennraum (11, 1100) begrenzt ist, und der Brennraum (7) gegen eine Unterseite (8) des Kolbens (3) durch eine mindestens einen Kolbenring (9) umfassende Kolbenringpackung abgedichtet ist, **dadurch gekennzeichnet, dass** ein Druckraum (10, 100, 1000) und ein Strömungskanal (12) zur Bildung einer Gasströmung (13) zwischen dem Druckraum (10, 100, 1000) und dem Teilbrennraum (11, 1100) vorgesehen ist.

2. Zylinderanordnung nach Anspruch 1, wobei der Kolben (3) derart als Stufenkolben (30) mit einem Basiskolben (31) und einem Kolbenkopf (32) ausgebildet ist, dass der Stufenkolben (30) mit einer stufenförmigen Ausnehmung (40) im Zylinderdeckel (4) derart zusammenwirkt, dass in einem Betriebszustand in der Nähe des oberen Totpunktes (OT) der Druckraum (10) in Form eines im Volumen veränderbaren Ringraums (100) zwischen dem Kolbenkopf (32) und der Zylinderwand (5) ausgebildet ist.

3. Zylinderanordnung nach einem der Ansprüche 1 oder 2, wobei der Strömungskanal (12) durch einen Strömungsspalt (12) zwischen einer Umfangsfläche des Stufenkolben (30) und der Zylinderwand (5), insbesondere zwischen einer Umfangsfläche (33) des Kolbenkopfs (32) ausgebildet ist.

4. Zylinderanordnung nach einem der vorangehenden Ansprüche, wobei der Strömungskanal (12) als Strömungsfurche (12) an der äusseren Umfangsfläche des Kolbenkopfs (32) ausgebildet ist.

5. Zylinderanordnung nach einem der vorangehenden Ansprüche, wobei der Strömungskanal (12) als Strömungsfurche (12) in der Zylinderwand (5) ausgebildet ist.

6. Zylinderanordnung nach einem der vorangehenden Ansprüche, wobei der Strömungskanal (12) als Strömungsleitung (12) zwischen dem Ringraum (100) und dem Teilbrennraum (11) ausgebildet ist und die Strömungsleitung (12) bevorzugt durch die Zylinderwand (5) und / oder durch den Zylinderdeckel (4) und / oder durch den Stufenkolben (3) geführt ist.

7. Zylinderanordnung nach einem der vorangehenden Ansprüche, wobei der Teilbrennraum (11) als Brennraumausnehmung (1100) im Kolben (3) derart ausgebildet ist, dass der Kolben (3) mit einem in den Brennraum (7) hineinragenden Vorsprung (400) des Zylinderdeckels (4) so zusammenwirkt, dass in einem Betriebszustand in der Nähe des oberen Totpunktes (OT) der Druckraum (10) in Form eines im Volumen veränderbaren Druckraums (1000) zwischen dem Zylinderdeckel (4) und der Kolbenoberfläche (6) des Kolbens (3) ausgebildet ist.

8. Zylinderanordnung nach einem der vorangehenden Ansprüche, wobei der Strömungskanal (12) als Strömungsleitung (12) zwischen dem Druckraum (1000) und der Brennraumausnehmung (1100) ausgebildet ist und die Strömungsleitung (12) bevorzugt durch den Zylinderdeckel (4) und / oder durch den Stufenkolben (3) geführt ist.

9. Zylinderanordnung nach einem der vorangehenden Ansprüche, wobei der Strömungskanal (12) als Strömungsfurche (12) an einer Umfangsfläche der Brennraumausnehmung (1100) am Kolben (3) ausgebildet ist.

10. Zylinderanordnung nach einem der vorangehenden Ansprüche, wobei der Strömungskanal (12) als Strömungsfurche (12) an einer Umfangsfläche des Vorsprungs (400) des Zylinderdeckels (4) ausgebildet ist.

11. Zylinderanordnung nach einem der vorangehenden Ansprüche, wobei der Druckraum (10) und der Strömungskanal (12) zur Bildung einer Gasströmung (13) zwischen dem Druckraum (10) und dem Teilbrennraum (11) als Ausnehmung in der Oberfläche (6) des Kolbens (3) vorgesehen ist.

12. Zylinderanordnung nach einem der vorangehenden Ansprüche, wobei der Druckraum (10) und der Strömungskanal (12) zur Bildung einer Gasströmung (13) zwischen dem Druckraum (10) und dem Teilbrennraum (11) als Ausnehmung in einer dem Brennraums (7) zugewandten Oberfläche des Zylinderdeckels (4) vorgesehen ist.

13. Zylinderanordnung nach einem der vorangehenden Ansprüche, wobei die Hubkolbenbrennkraftmaschine ein Zweitakt- oder Viertakt-Verbrennungsmotor, insbesondere ein Zweitakt- oder Viertakt Dieselmotor, im Speziellen ein Zweitakt-Grossdieselmotor zur Verbrennung von Schweröl ist.

14. Hubkolbenbrennkraftmaschine, insbesondere Zweitakt- oder Viertakt Dieselmotor, Benzinmotor oder Gasmotor, im Speziellen Zweitakt-Grossdieselmotor zur Verbrennung von Schweröl, mit einer Zylinderanordnung nach einem der vorangehenden Ansprüche.
